# EUROPÄISCHE PATENTSCHRIFT

(11) **EP 1 992 225 B1**
(45) Veröffentlichungstag und Bekanntmachung des Hinweises auf die Patenterteilung: **16.02.2011**
(21) Anmeldenummer: 08009083.0
(22) Anmeldetag: 16.05.2008
(51) Int. Cl.: A01M 29/16

(54) **Abschreckvorrichtung**
Deterrent device
Dispositif de dissuasion

(30) Priorität: 16.05.2007 DE 202007007071 U
(43) Veröffentlichungstag der Anmeldung: 19.11.2008
(73) Patentinhaber: ISOTRONIC Mezger KG, 72160 Horb (DE)
(72) Erfinder: Mezger, Harald, 72178 Waldachtal-Salzstetten (DE)
(74) Vertreter: Erb, Henning

(56) Entgegenhaltungen:
- DE-U1-202005 010 921
- US-A- 4 227 939
- US-A- 5 427 628
- US-A- 5 716 442
- US-A- 6 020 553
- US-B1- 6 392 541

## Beschreibung

Die vorliegende Erfindung befasst sich mit einer Abschreckvorrichtung zum Vertreiben von geräusch- und/oder schwingungsempfindlichen Schädlingen, die im Erdreich leben, mit einem in das Erdreich einsteckbaren Schaft, in welchem eine Vorrichtung zur Erzeugung von Geräuschen und/oder unhörbaren Schwingungen angeordnet ist, die an das Erdreich abgegeben werden und die Schädlinge vertreiben, wobei der Schaft ein aus dem Boden herausragendes tellerförmiges oberes Ende hat, auf dessen Oberseite photovoltaische Elemente zur Umwandlung von Tageslicht in elektrische Energie angeordnet sind, die für den Betrieb der Vorrichtung zur Erzeugung von Schwingungen und/oder Geräuschen verwendet wird und in Akkus speicherbar ist, wobei die photovoltaischen Elemente mit einer einstückigen lichtdurchlässigen Abdeckung versehen sind.

Abschreckvorrichtungen der eingangs beschriebenen Art sind aus der DE 20 2005 010921 Ul bekannt und werden zum Schutz von Gartenanlagen verwendet, um beispielsweise Wühlmäuse, Maulwürfe und andere Bodennager in ihrer Lebensweise zu stören und zu vertreiben. Die Vertreibung erfolgt dadurch, dass eine Vorrichtung in den Boden gesteckt wird, in der eine Schwingung in einem Frequenzbereich erzeugt wird, den die im Erdreich lebenden Tiere als störend empfinden, beispielsweise eine Frequenz von ca. 400 Hz. Die im Handel verfügbaren Abschreckvorrichtungen, die auch als Wühltierfrei bezeichnet werden, erzeugen die Frequenz in eingeschaltetem Zustand in der Regel in einem Intervall. Zur Stromversorgung werden Solarmodule, d. h. photovoltaische Elemente, verwendet, wobei die erzeugte elektrische Energie in Akkus gespeichert wird. In ihrer Abschreckfunktion haben die Verrichtungen eine gewisse Fernwirkung, die von der jeweilige Situation abhängt, unter anderem vom Bodenaufbau und von der Art der zu vertreibenden Schädlinge. Die Anordnung kann daher variabel erfolgen, wobei jedoch nur das Einhalten situationsbedingter Maximalabstände eine flächendeckende Vertreibung gewährleistet. Es hat sich jedoch gezeigt, dass die Stromversorgung oftmals nicht ausreicht, um eine wirkungsvolle Abschreckung zu gewährleisten. Insbesondere an bewölkten Tagen kann es dazu kommen, dass der Energiebedarf nicht gedeckt werden kann. Zu einem Energieengpass kann es außerdem beispielsweise auch dann kommen, wenn für eine weiterreichende, d. h. wirkungsvollere Abschreckung kürzere Intervalle oder lautere Geräusche bzw. stärkere Schwingungen erforderlich sind.

Die US 6 020 533 A zeigt eine Abdeckung photovoltaischer Elemente mit optischen Strukturen. Die Aufgabe der vorliegenden Erfindung besteht daher darin, eine Abschreckvorrichtung mit verbesserter Energieversorgung zu schaffen.

Erfindungsgemäß wird die Aufgabe durch eine Abschreckvorrichtung der eingangs beschriebenen Art gelöst, bei der die Abdeckung wenigstens teilweise mit optischen Strukturen in Form von lichtbrechenden Kanten und/oder lichtbündelnden Wölbungen ausgebildet ist, die das auftreffende Licht in Richtung der photovoltaischen Elemente umlenken, wobei die Abdeckung wenigstens teilweise mit optischen Strukturen in Form von lichtbrechenden Kanten und/oder lichtbündelnden Wölbungen ausgebildet ist, die das auftreffende Licht in Richtung der photovoltaischen Elemente) umlenken, wobei die Abdeckung wenigstens teilweise als Kuppel ausgebildet ist und die photovoltaischen Elemente als ebene Platte ausgebildet sind, die innerhalb der kuppelförmigen Abdeckung angehoben angeordnet list.

Der Vorteil der erfindungsgemäßen Abschreckvorrichtung besteht darin, dass der Wirkungsgrad der Energiegewinnung, d. h. die Lichtausbeute, deutlich verbessert ist. Die photovoltaischen Elemente stellen auch bei flach auftreffendem Licht ausreichend elektrische Energie zur Erzeugung der Geräusche und/oder Schwingungen sowie zum Aufladen der Akkus zur Verfügung. Aufgrund der höheren Lichtausbeute steht mehr Energie zur Verfügung, so dass die Geräusche wesentlich öfter und/oder intensiver erzeugt werden können, was bedeutet, dass mit der Vorrichtung über einen längeren Zeitraum geringer Sonneneinstrahlung oder Bewölkung eine intensivere Abschreckung möglich ist. Die höhere Leistungsfähigkeit der Stromversorgung führt somit zu einer verbesserten Abschreckung beziehungsweise einem größeren Wirkungsradius.

Die Abdeckung ist wenigstens teilweise als Kuppel ausgebildet, damit auch sehr flach auftreffendes Licht auf den photovoltaischen Elementen auftrifft.

Die photovoltaischen Elemente sind als ebene Platte ausgebildet, die innerhalb der kuppelförmigen Abdeckung angehoben angeordnet ist den Wirkungsgrad zu verbessern.

In einer weiter bevorzugten Ausführungsform ist die Platte der photovoltaischen Elemente in halber Höhe innerhalb der kuppelförmigen Abdeckung angeordnet, da sich bei dieser Anordnung ein maximaler Wirkungsgrad ergibt. Dies ist unter anderem dadurch bedingt, dass die photovoltaischen Elemente durch das Anheben beidseitig Wärme abgeben können, was deren Wirkungsgrad verbessert.

Vorzugweise weist wenigstens der Randbereich eine prismatische Struktur auf, die das Licht auf die photovoltaischen

Elemente lenkt. Eine derartige prismatische Struktur lässt sich kostengünstig herstellen, beispielsweise in einem Spritzgussverfahren bei einer Abdeckung aus Kunststoff.

In einer weiter bevorzugten Ausführungsform ist die Abdeckung wenigstens teilweise diamantartig facettiert, so dass Licht aus möglichst unterschiedlichen Richtungen auf die photovoltaischen Elemente gelenkt werden kann. Dadurch kann bis zu einem gewissen Grad auch das Zenitlicht für die Energiegewinnung genutzt werden.

Zweckmäßigerweise ist der tellerförmige Bereich sechseckig, um mit den prismatischen Strukturen zu korrespondieren. Dadurch ergeben sich einfacher ausgebildete Randbereiche, was die Herstellungskosten reduziert. Die sechseckige Form berücksichtigt außerdem die Ausbildung der photovoltaischen Elemente, bei denen eine runde Form in der Regel nicht möglich ist. Bei der sechseckigen Form hingegen kann die zur Verfügung stehende Fläche mit den photovoltaischen Elementen optimal genutzt werden.

In einer weiter bevorzugten Ausführungsform liegt die Abdeckung auf dem Rand des tellerförmigen Bereichs auf, damit das Eigengewicht und andere von oben wirkende Kräfte, z. B. beim Einbringen des Schafts in das Erdreich, zuverlässig in die tragende Struktur der Abschreckvorrichtung eingeleitet werden können.

Für eine sowohl einfache als auch dauerhafte Befestigung ist die Abdeckung an dem tellerförmigen Bereich mittels einer Schnappverbindung gehalten. Beispielsweise hintergreift der Rand der Abdeckung einen Vorsprung des tellerförmigen Bereichs.

Weiter bevorzugt ist eine Ausführungsform, bei welcher der tellerförmige Bereich auf der Unterseite in einen Verbindungsstutzen übergeht, der auf den Schaft aufsteckbar ist. Dadurch lässt sich die Abschreckvorrichtung in möglichst wenigen Montageschritten zusammensetzen. Um den oberen Bereich an dem Schaft dauerhaft zu fixieren, ist beispielsweise eine Verrastung vorgesehen.

Vorzugswiese ist der Schaft ein einstückiger zylindrischer Hohlkörper, dessen unteres Ende spitz zuläuft. Letzteres ermöglicht, dass das Eindrücken des Schafts in das Erdreich mit möglichst wenig Kraft erfolgen kann. Da der Schaft im Erdreich nahezu dauerhaft einer gewissen Feuchtigkeit ausgesetzt ist, sind in diesem Bereich besonders hohe Anforderungen an die Dichtigkeit zu stellen, damit nicht auf Dauer Wasser oder Schmutz in das Innere eindringen kann, was zu Schaden an den Inneren angeordneten elektrischen Komponenten führen würde. Die einstückige Ausbildung des Schafts bietet eine besonders zuverlässige Dichtigkeit, da bei dieser Lösung im Bereich des Erdreichs gar keine Dichtungen vorhanden sind.

Weiter bevorzugt ist eine Ausführungsform, bei der die Akkus innerhalb des Schafts angeordnet sind. Dies bietet sich vor allem bei zylindrischen Akkus an, die den ebenfalls zylindrischen Hohlraum des Schafts möglichst effizient nutzen können. Außerdem wird der Schwerpunkt der Abschreckvorrichtung nach unten verlagert, was die Standfestigkeit insbesondere in einem weichen Untergrund verbessert. Die Akkus können aber auch in dem tellerförmigen Bereich unterhalb der photovoltaischen Elemente angeordnet sein, beispielsweise wenn die für die Aufladung erforderliche Steuerelektronik in diesem Bereich angeordnet ist. Selbstverständlich können die Akkus im Schaft und im tellerförmigen Bereich untergebracht werden, wenn die Stromversorgung möglichst leistungsfähig sein soll.

Nachfolgend wird anhand der beigefügten Zeichnungen näher auf ein Ausführungsbeispiel der Erfindung eingegangen. Es zeigen:
- Fig. 1: eine Explosionszeichnung einer Abschreckvorrichtung und
- Fig. 2: einen Vertikalschnitt durch die zusammengesetzte Abschreckvorrichtung nach Fig. 1.

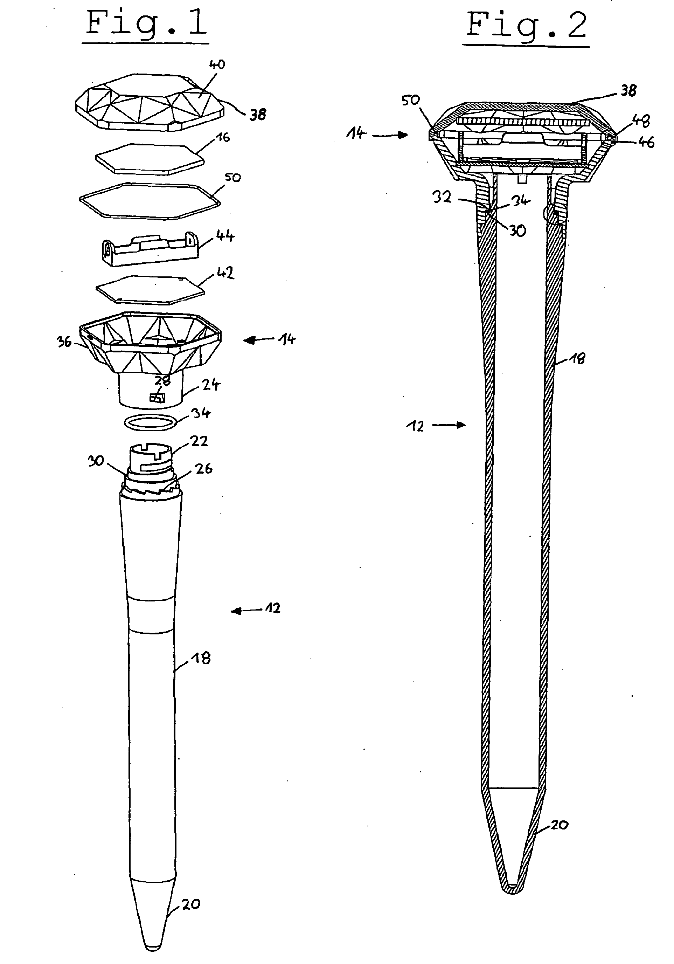

In Fig. 1 ist eine Abschreckvorrichtung zum Vertreiben von geräusch- und/oder schwingungsempfindlichen Schädlingen, die im Erdreich leben, gezeigt. Die Abschreckvorrichtung weist einen in das Erdreich einsteckbaren Schaft 12 auf, in dem eine nicht gezeigte Vorrichtung zur Erzeugung von Geräuschen und/oder Schwingungen angeordnet ist. Da der Schaft 12 bei Verwendung der Abschreckvorrichtung im Erdreich eingesteckt ist, werden die Schwingungen über den Schaft 12 an das Erdreich abgegeben und vertreiben so die Schädlinge.

An dem aus dem Boden herausragenden oberen Ende des Schafts 12 ist ein tellerförmiger Bereich 14 vorgesehen, der auf der Oberseite mit photovoltaischen Elementen 16 zur Umwandlung von Licht in elektrische Energie ausgestattet ist. Die elektrische Energie wird für den Betrieb der Vorrichtung zur Erzeugung von Schwingungen und/oder Geräuschen verwendet. Um einen Betrieb auch dann zu ermöglichen, wenn kein oder nur unzureichendes Sonnenlicht zur Verfügung steht, sind nicht dargestellte Akkus als Speichermedium vorgesehen.

Der Schaft 12 besteht aus einem einstückigen zylindrischen Hohlkörper 18, dessen unteres Ende 20 spitz zuläuft. Aufgrund der Spitze 20 lässt sich der Schaft leichter in das Erdreich hinein drücken. Neben der bereits erwähnten Vorrichtung zur Geräuscherzeugung können in dem Schaft 12 auch Akkus untergebracht werden.

An seinem oberen Ende ist der Schaft 12 mit einem abgestuften Anschluss 22 ausgebildet, auf den der tellerförmige Bereich 14 aufgesteckt wird, wozu letzterer auf der Unterseite einen Verbindungsstutzen 24 aufweist, der komplementär zu dem abgestuften Anschluss 22 ausgebildet ist. Für eine einfache und dauerhafte Verbindung des Schafts 12 mit dem tellerförmigen Bereich 14 ist ein Rastmechanismus mit einer Verzahnung 26 am Schaft 12 und Rastnasen 28 am Verbindungsstutzen 24 vorgesehen, wobei zwischen einer stirnseitigen Fläche eines ersten Absatzes 30 am Schaft 12 und einer stirnseitigen Fläche eines zweiten Absatzes 32 an dem Verbindungsstutzen 14 eine O-Ringdichtung 34 angeordnet ist, die beim Verbinden des Schafts 12 mit dem tellerförmigen Bereich 14 derart zusammengedrückt wird, dass eine zuverlässige Abdichtung das Eintreten von Feuchtigkeit oder Schmutz verhindert.

Der tellerförmigen Bereich 14 geht vom Verbindungsstutzen 24 in einen sich nach außen erweiternden Gehäusebereich 36 über. Auf diesem ist eine einstückige lichtdurchlässige Abdeckung 38 befestigt, unterhalb derer die photovoltaischen Elemente 16 angeordnet sind, wobei die Abdeckung 38 als Kuppel ausgebildet ist und wenigstens teilweise mit optischen Strukturen 40 in Form von lichtbrechenden Kanten und/oder lichtbündelnden Wölbungen versehen ist, die das auftreffende Licht in Richtung der photovoltaischen Elemente 16 umlenken, welche als ebene Platte ausgebildet sind. Dir Struktur ähnelt einem geschliffenen Diamanten.

In dem Ausführungsbeispiel sind die optischen Strukturen 40 der Abdeckung umlaufend im Randbereich entsprechend als prismatische Strukturen ausgebildet, die das auftreffende Licht und insbesondere das flach auftreffende Licht in Richtung der photovoltaischen Elemente 16 umleiten.

Die Abdeckung 38 liegt auf dem Rand des tellerförmigen Bereichs 14 und ist mittels einer Schnappverbindung gehalten, bei welcher der Rand 46 der Abdeckung 38 einen Vorsprung 48 des tellerförmigen Bereichs 14 hintergreift. Eine Formdichtung 50 gewährleistet die Dichtigkeit der Verbindung und schützt den inneren Bereich mit den elektrischen Komponenten vor eindringendem Schmutz und Feuchtigkeit.

Der Gehäusebereich 36 ist im Inneren mit einer horizontal angeordneten Trägerplatte 42 versehen, auf der eine Aufnahme 44 für Akkus befestigt ist. Die Trägerplatte 42 dient außerdem der Aufnahme einer nicht gezeigten Steuerelektronik der Abschreckvorrichtung.

Oberhalb der Aufnahme 44 für die Akkus sind die photovoltaischen Elemente 16 angehoben angeordnet, wobei sie sich in ca. der halben Höhe innerhalb der kuppelförmigen Abdeckung 38 befinden.

Sowohl der tellerförmige Bereich 14 als auch die Abdeckung 38 und die photovoltaischen Elemente 16 sowie die Trägerplatte 42 sind in der Draufsicht sechseckig.

Durch das Aufsetzen der Abdeckung 38 werden die Trägerplatte 42 und die Platte der photovoltaischen Elemente 16 in ihrer jeweiligen Lage gehalten, wobei für die einzelnen Komponenten jeweils Ausnehmungen vorgesehen sind, damit die Komponenten beim Zusammensetzen zwangsläufig ihre vorbestimmte Position einnehmen.

## Patentansprüche

1. Abschreckvorrichtung zum Vertreiben von geräusch- und/oder schwingungsempfindlichen Schädlingen, die im Erdreich leben, mit einem in das Erdreich einsteckbaren Schaft (12), in welchem eine Vorrichtung zur Erzeugung von Geräuschen und/oder Schwingungen angeordnet ist, die an das Erdreich abgegeben werden und die Schädlinge vertreiben, wobei der Schaft (12) ein aus dem Boden herausragendes tellerförmiges oberes Ende (14) hat, auf dessen Oberseite photovoltaische Elemente (16) zur Umwandlung von Tageslicht in elektrische Energie angeordnet sind, die für den Betrieb der Vorrichtung zur Erzeugung von Schwingungen und/oder Geräuschen verwendet wird und in Akkus speicherbar ist, wobei die photovoltaischen Elemente (16) mit einer einstückigen lichtdurchlässigen Abdeckung (38) versehen sind, **dadurch gekennzeichnet, dass** die Abdeckung (38) wenigstens teilweise mit optischen Strukturen (40) in Form von lichtbrechenden Kanten und/oder lichtbündelnden Wölbungen ausgebildet ist, die das auftreffende Licht in Richtung der photovoltaischen Elemente (16) umlenken, wobei die Abdeckung (38) wenigstens teilweise als Kuppel ausgebildet ist und die photovoltaischen Elemente (16) als ebene Platte ausgebildet sind, die innerhalb der kuppelförmigen Abdeckung (38) angehoben angeordnet ist.

2. Abschreckvorrichtung nach Anspruch 1, **dadurch gekennzeichnet, dass** die Platte der photovoltaischen Elemente (16) in halber Höhe innerhalb der kuppelförmigen Abdeckung (38) angeordnet ist.

3. Absckreckvorrichtung nach einem der vorhergehenden Ansprüche, **dadurch gekennzeichnet, dass** wenigstens der Randbereich der Abdeckung (38) eine prismatische Struktur aufweist.

4. Abschreckvorrichtung nach Anspruch 3, **dadurch gekennzeichnet, dass** die Abdeckung (38) wenigstens teilweise facettiert ist.

5. Abschreckvorrichtung nach einem der vorhergehenden Ansprüche, **dadurch gekennzeichnet, dass** der tellerförmige Bereich (14) sechseckig ist.

6. Abschreckvorrichtung nach einem der vorhergehenden Ansprüche, **dadurch gekennzeichnet, dass** die Abdeckung (38) auf dem Rand des tellerförmigen Bereichs (14) aufliegt.

7. Abschreckvorrichtung nach Anspruch 6, **dadurch gekennzeichnet, dass** die Abdeckung (38) an dem tellerförmigen Bereich (14) mittels einer Schnappverbindung gehalten ist.

8. Abschreckvorrichtung nach Anspruch 7, **dadurch gekennzeichnet, dass** der Rand der Abdeckung (38) einen vorsprung des tellerförmigen Bereichs (14) hintergreift.

9. Abschreckvorrichtung nach einem der vorhergehenden Ansprüche, **dadurch gekennzeichnet, dass** der tellerförmige Bereich (14) auf der Unterseite in einen Verbindungsstutzen (24) übergeht, der auf den Schaft (12) aufsteckbar ist.

10. Abschreckvorrichtung nach einem der vorhergehenden Ansprüche, **dadurch gekennzeichnet, dass** der Schaft (12) ein einstückiger zylindrischer Hohlkörper (18) ist, dessen unteres Ende (20) spitz zuläuft.

11. Abschreckvorrichtung nach Anspruch 10, **dadurch gekennzeichnet, dass** die Akkus innerhalb des Schafts (12) angeordnet sind.

12. Abschreckvorrichtung nach einem der vorhergehenden Ansprüche, **dadurch gekennzeichnet, dass** die Akkus im tellerförmigen Bereich (14) unterhalb der photovoltaischen Elemente (16) angeordnet sind.

## Claims

1. A deterrent device for repelling noise and/or vibration-sensitive pests which live in the ground, with a shaft (12) which can be inserted into the ground and in which a device for generating noise and/or vibrations is disposed, which are emitted into the ground and repel the pests, wherein the shaft (12) has a cup-shaped upper end (14) which protrudes from the base and on the upper side of which are provided photovoltaic elements (16) for converting daylight into electrical energy which is used to operate the device for generating vibrations and/or noise and which can be stored in batteries, wherein the photovoltaic elements (16) are provided with a one-piece light-permeable cover (38), **characterised in that** the cover (38) is formed at least partly with optical structures (40) in the form of refractive edges and/or light-concentrating curvatures which deflect the incident light towards the photovoltaic elements (16), wherein the cover (38) is at least partly in the form of a dome and the photovoltaic elements (16) are in the form of a flat plate which is arranged raised inside the dome-shaped cover (38).

2. A deterrent device according to Claim 1, **characterised in that** the panel of the photovoltaic elements (16) is arranged at half height inside the dome-shaped cover (38).

3. A deterrent device according to any one of the preceding Claims, **characterised in that** at least the rim region of the cover (38) has a prismatic structure.

4. A deterrent device according to Claim 3, **characterised in that** the cover (38) is at least partly bevelled.

5. A deterrent device according to any one of the preceding Claims, **characterised in that** the cup-shaped region (14) is hexagonal.

6. A deterrent device according to any one of the preceding Claims, **characterised in that** the cover (38) rests on the rim of the cup-shaped region (14).

7. A deterrent device according to Claim 6, **characterised in that** the cover (38) is retained on the cup-shaped region (14) by means of a snap-on fastening.

8. A deterrent device according to Claim 7, **characterised in that** the rim of the cover (38) engages behind a projection of the cup-shaped region (14).

9. A deterrent device according to any one of the preceding Claims, **characterised in that** on its underside the cup-shaped region (14) merges into a connector socket (24) which can be fitted on to the shaft (12).

10. A deterrent device according to any one of the preceding Claims, **characterised in that** the shaft (12) is a one-piece cylindrical hollow body (18), the lower end (20) of which is tapered.

11. A deterrent device according to Claim 10, **characterised in that** the batteries are disposed inside the shaft (12).

12. A deterrent device according to any one of the preceding Claims, **characterised in that** the batteries are disposed in the cup-shaped region (14) below the photovoltaic elements (16).

## Revendications

1. Dispositif de dissuasion pour repousser des parasites sensibles à des bruits et/ou des vibrations, et vivant sous terre, comportant une tige (12) qui se plante dans la terre et comporte un dispositif générant des bruits et/ou des vibrations transmis à la terre et repoussant les parasites,
- la tige (12) ayant une extrémité supérieure (14) en forme de coupelle, dépassant du sol, et dont le côté supérieur comporte des éléments photovoltaïques (16) pour convertir la lumière du jour en énergie électrique stockée dans un accumulateur, et utilisée pour le fonctionnement du dispositif générant des bruits et/ou des vibrations,
- les éléments photovoltaïques (16) étant munis d'une couverture (38) en une seule pièce, transparente à la lumière,
dispositif **caractérisé en ce que**
la couverture (38) est réalisée au moins en partie avec des structures optiques (40) sous la forme d'arêtes de réfraction optique et/ou de parties bombées regroupant les rayons de lumière, et dirigeant la lumière incidente vers les éléments photovoltaïques (16),
la couverture (38) étant réalisée au moins en partie sous la forme d'une coupole et les éléments photovoltaïques (16) étant réalisés sous la forme d'une plaque plane installée en position surélevée dans la couverture (38) en forme de coupole.

2. Dispositif de dissuasion selon la revendication 1,
**caractérisé en ce que**
la plaque des éléments photovoltaïques (16) est installée sensiblement à mi-hauteur dans la couverture (38) en forme de coupole.

3. Dispositif de dissuasion selon l'une des revendications précédentes,
**caractérisé en ce qu'**
au moins la zone marginale de la couverture (38) a une structure prismatique.

4. Dispositif de dissuasion selon la revendication 3,
**caractérisé en ce que**
la couverture (38) est au moins en partie formée de facettes.

5. Dispositif de dissuasion selon l'une quelconque des revendications précédentes,
**caractérisé en ce que**
la zone (14) en forme de coupelle est un hexagone.

6. Dispositif de dissuasion selon l'une quelconque des revendications précédentes,
**caractérisé en ce que**
la couverture (38) est appliquée sur le bord de la zone (14) en forme de coupelle.

7. Dispositif de dissuasion selon la revendication 6,
**caractérisé en ce que**
la couverture (38) est tenue à la zone (14) en forme de coupelle par l'intermédiaire d'une liaison par clipage.

8. Dispositif de dissuasion selon la revendication 7,
**caractérisé en ce que**
le bord de la couverture (38) vient prendre derrière une partie en saillie de la zone (14) en forme de coupelle.

9. Dispositif de dissuasion selon l'une quelconque des revendications précédentes,
**caractérisé en ce que**
la zone (14) en forme de coupelle rejoint sur le côté inférieur un manchon de liaison (24) qui est emmanché sur la tige (12).

10. Dispositif de dissuasion selon l'une quelconque des revendications précédentes,
**caractérisé en ce que**
la tige (12) est un corps cylindrique creux (18) en une seule pièce dont l'extrémité inférieure (20) se termine en pointe.

11. Dispositif de dissuasion selon la revendication 10,
**caractérisé en ce que**
les accumulateurs sont logés dans la tige (12).

12. Dispositif de dissuasion selon l'une quelconque des revendications précédentes,
**caractérisé en ce que**
les accumulateurs sont logés dans la zone en forme de coupelle (14) sous les éléments photovoltaïques (16).
